# EUROPEAN PATENT SPECIFICATION

(11) **EP 3 361 109 B1**
(45) Date of publication and mention of the grant of the patent: **08.09.2021**
(21) Application number: 16853394.1
(22) Date of filing: 14.09.2016
(51) Int. Cl.: F16C 1/14, F16F 1/06, F16F 1/12, F16C 1/20, F16C 1/26, F16F 1/08, F16C 1/16

(54) **CONTROL CABLE**
STEUERKABEL
CÂBLE DE COMMANDE

(30) Priority: 06.10.2015 JP 2015198767
(43) Date of publication of application: 15.08.2018
(73) Proprietor: HI-LEX Corporation, Takarazuka-shi, Hyogo 665-0845 (JP)
(72) Inventor: TOKIMASA, Hidenori, Takarazuka-shi Hyogo 665-0845 (JP)
(74) Representative: Epping - Hermann - Fischer
(86) International application number: PCT/JP2016/077038
(87) International publication number: WO 2017/061240

(56) References cited:
- EP-A1- 0 494 276
- JP-A- H01 141 215
- JP-A- 2003 130 108
- JP-U- H0 659 623
- JP-U- S57 130 032
- JP-U- S60 138 016

## Description

### Technical Field

The present invention relates to a control cable including an inner cable and an outer casing that is provided on an outer periphery of the inner cable.

### Background Art

In document JP S60 138016 U a control cable is described which comprises an inner cable, an outer casing in which the inner cable slides, a hollow member to be fixed to an end portion of the outer casing, a rod member including a fixing portion which one end of the inner cable is fixed, and being configured to move inside the hollow member, and a coil spring through which the inner cable is inserted, the coil spring being placed in the hollow member so as to be expandable and contractible along a slide direction of the rod member by being connected to the fixing portion at one end of the coil spring and being connected to a seating portion, which is provided on an inner side of the hollow member, at another end of the coil spring such that the other end of the coil spring is restricted from moving to a side of the outer casing , the coil spring includes; a small-diameter portion slidable along an outer peripheral surface of the inner cable, and a large-diameter portion having an inner diameter larger than an inner diameter of the small-diameter portion,an inner diameter of an internal space of an leading end portion in which the rod member and the coil spring are placed in the hollow member is larger than both an outer diameter of the rod member and an outer diameter of the large-diameter portion of the coil spring, throughout a length of the leading end portion, and the small-diameter portion is provided in a position where movement of the small-diameter portion in the radial direction is suppressed by the inner cable when the one end of the coil spring is pressed by the fixing portion. Document EP 0 494 276 A1 discloses a device to be connected with a control cable. In the device, a coil spring having a small-diameter portion and a large-diameter portion is provided around a slidable rod within a hollow member.

As an example of the control cable, a control cable described in Patent Literature (hereinafter, referred to "PTL") 1 can be cited. In the control cable disclosed in PTL 1, a rod member (moving part) that slides inside a guide pipe is fixed to one end of an inner cable and pulled into a hollow member (guide cylinder) fixed to an end portion of an outer casing. Moreover, a coil spring (buckling regulation member) that is expandable and contractible along a slide direction of the rod member is provided inside the hollow member with the inner cable inserted through the coil spring.

In the control cable described in PTL 1, including the coil spring supposedly enables prevention of buckling of the inner cable.

### Citation List

### Patent Literature

PTL 1
Japanese Patent Application Laid-Open No. H08-219140

### Summary of Invention

### Technical Problem

In some cases, a clearance is provided between a rod member and a guide pipe in a control cable. When the configuration disclosed in PTL 1 is applied to a control cable having a clearance, however, a malfunction such as a failure in which operation is not performed smoothly or an operation stops in the middle of operation has occurred in some cases.

An object of the present invention is to provide a control cable capable of suppressing a malfunction.

### Solution to Problem

A control cable of the present invention includes an inner cable, an outer casing in which the inner cable slides, a hollow member to be fixed to an end portion of the outer casing, a rod member , and a coil spring through which the inner cable is inserted, and which is placed in the hollow member so as to be expandable and contractible along a slide direction of the rod member by being connected to the fixing portion at one end of the coil spring and being connected to a seating portion at another end of the coil spring. The rod member has a fixing portion which one end of the inner cable and moves inside the hollow member. The seat portion is provided inside of the hollow member such that the end of the coil spring is restricted from moving to a side of the outer casing. In the control cable of the present invention, a gap exists in a radial direction between the rod member and the hollow member, the coil spring has a diameter that allows a wire diameter to enter the gap, and the coil spring includes a small-diameter portion slidable along an outer peripheral surface of the inner cable, and a large-diameter portion having an inner diameter larger than an inner diameter of the small-diameter portion. An inner diameter of an internal space of an leading end portion in which the rod member and the coil spring are placed in the hollow member is larger than both an outer diameter of the rod member and an outer diameter of the large-diameter portion of the coil spring, throughout a length of the leading end portion. When one end of the coil spring is pressed by the fitting portion, the movement of the small-diameter portion in the radial direction is suppressed by the inner cable, and thus, the small-diameter portion is provided in a position where entry of the coil spring into the gap can be suppressed.

### Advantageous Effects of Invention

According to the control cable of the present invention, a malfunction can be suppressed.

### Brief Description of Drawings

FIG. 1 (a) is a partially-broken plan view of a control cable according to an embodiment,(b) is a partially-broken plan view of a state in which a coil spring is compressed by movement of a rod member from the state of (a); and (c) which is a main-part enlarged cross-sectional view of (b).
FIG. 2 (a) is a partially-broken plan view of a portion where the rod member and coil spring of the control cable according to the embodiment are connected to each other, (b) is a plan view for describing the coil spring of (a), and (c) which is a partially-broken plan view illustrating a state in which the coil spring of (a) has moved in a radial direction.
FIG. 3 is a partially-broken plan view illustrating a variation of the rod member of the control cable according to the embodiment.
FIG. 4 (a) is a partially-broken plan view for describing an operation of the rod member of the control cable according to the embodiment, and (b) is a partially-broken plan view of a portion where the rod member and the coil spring of (a) are connected to each other.
FIG. 5 (a) is a partially-broken plan view of a portion where a rod member and a coil spring of a control cable according to a comparative example are connected to each other, and (b) is a partially-broken plan view for describing occurrence of a malfunction in (a).
FIG. 6 (a) is a plan view illustrating a variation of the coil spring of the control cable according to the embodiment, (b) is a plan view of the coil spring of another variation, and (c) is a plan view of the coil spring of yet another variation.

### Description of Embodiments

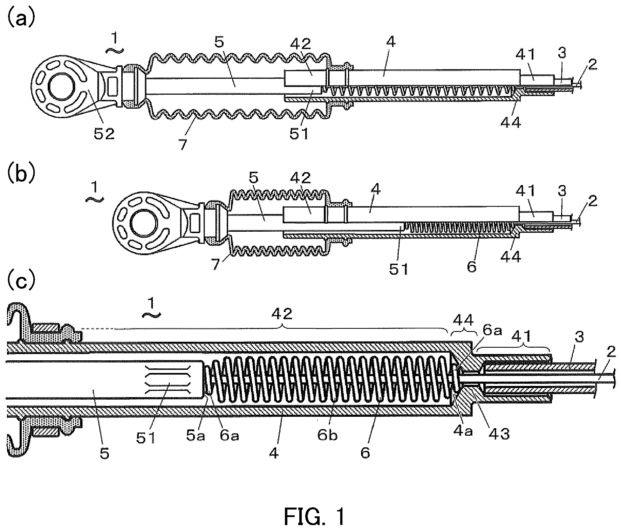

A control cable according to an embodiment of the present invention will be described with reference to the drawings. As illustrated in FIG. 1, control cable 1 includes inner cable 2, outer casing 3 in which inner cable 2 slides, hollow member 4 to be fixed to an end portion of outer casing 3, rod member 5 to which one end of inner cable 2 is fixed and which moves inside of hollow member 4, and coil spring 6 to be disposed in hollow member 4 so as to be expandable and contractible along a moving direction of rod member 5. An opening of hollow member 4 on one end side of inner cable 2 is covered by boot 7 which has a rubber-made accordion structure. In this embodiment, rod member 5 includes coupling portion 52 of an annular shape at one end portion of rod member 5 which is opposite side to an end side of rod member 5 to which one end of inner cable 2 is fixed, and coupling portion 52 is connected to a operated part (not illustrated). Note that, in this embodiment, a description is given with a configuration in which the operated part is connected to one end side of inner cable 2, but a configuration in which an operation part is connected to one end side and the operated part is connected to the other end side may be employed.

Inner cable 2 is flexible, and is, for example, a stranded wire of a plurality of steel wires and/or the like used as wires. Inner cable 2 is connected to the operated part (not illustrated) at one end of inner cable 2 via rod member 5 and is connected to the operation part (not illustrated) at the other end thereof. Inner cable 2 is provided tensile force in order for inner cable 2 to transmit an operational force added to the operation part to the operated part. Inner cable 2 has rigidity that allows inner cable 2 to bear the tensile force and the load applied for operating the operated part, and thus is capable of transmitting a target load.

Outer casing 3 includes a hollow member connection portion which is an end portion on a side of hollow member 4, and an end portion (base end portion) opposite side of the hollow member connection portion. Outer casing 3 includes openings at the end portions, respectively, and is a flexible and elongated tube member. Inner cable 2 is slidably inserted through the internal space (hollow portion) of outer casing 3. Outer casing 3 guides inner cable 2 which has been inserted through outer casing 3 to a predetermined position in a routing path, and holds inner cable 2 in a state where inner cable 2 is slidable in an axial direction of outer casing 3. Moreover, outer casing 3 includes a fixing portion capable of fixing hollow member 4 in a predetermined state to a side of the end portion of outer casing 3 that becomes at least one end side of the inner cable.

Hollow member 4 includes openings at both ends of hollow member 4 respectively, and includes outer connection portion 41 which is a cylindrical shaped portion to be fixed to an end portion of outer casing 3, and leading end portion 42 which is a cylindrical shaped portion on a side opposite to outer connection portion 41. Outer connection portion 41 and leading end portion 42 include openings at leading ends thereof, respectively, and are coaxially connected to each other via middle portion 44 which includes a communication passage communicating between these openings. Connection portion 41 of hollow member 4 is connected to an end portion of outer casing 3 on one end side of inner cable 2, and the internal space (hollow portion) of outer casing 3 and the communication passage of middle portion 44 communicate with each other, and leading end portion 42 is the leading end of a portion extending out from outer casing 3. Protruding portion 43 which protrudes inward in a radial direction toward the axis of middle portion 44 from an inner wall of the communication passage is provided in middle portion 44. Protruding portion 43 is provided continuously in a circumferential direction and forms a ring shape having an axially centered hole. As long as protruding portion 43 is capable of restricting spring 6 from moving to a side of outer casing 3 and allows inner cable 2 to move from the side of the outer casing to a leading end side of hollow member 4, protruding portion 43 is not limited, particularly. In the present embodiment, protruding portion 43 has a partition-like shape formed with an axially centered communication hole, and inner cable 2 is relatively freely movable between the side of the outer casing and the leading end side of hollow member 4. In control cable 1, protruding portion 43 functioning as an engagement portion of spring 6 is provided at a boundary portion with outer connection portion 41 in middle portion 44, i.e., at an end portion on the side of the outer casing of middle portion 44. For this reason, protruding portion 43 is capable of coming into contact with an end portion of outer casing 3 (outer-casing side end portion).

Hollow member 4 functions as a cap for outer casing 3 and is fixed to an end portion of outer casing 3 on a side of a middle member as described above. This fixing is performed by inserting the end portion of outer casing 3 into the hollow portion on an inner side of outer connection portion 41. Furthermore, the end portion of outer casing 3 and hollow member 4 may be more firmly fixed to each other by application of swaging on connection portion 41 in a state where the end portion of outer casing 3 is inserted into connection portion 41. In this case, a position where the end portion of outer casing 3 comes into contact with an end surface of protruding portion 43 on a side facing the connection portion in the axial direction may be set to the fixing position so as to make it easy to secure an insertion amount of outer casing 3. Coil spring 6 is housed in hollow member 4. Inside of hollow member 4, an end surface on a side facing leading end portion 42 in the axial direction in protruding portion 43 is connected to an outer-side end portion of coil spring 6. Moreover, coil spring 6 is inserted into an internal space of leading end portion 42 of hollow member 4. Hollow member 4 and rod member 5 are configured to be relatively movable with respect to inner cable 2 by movement of inner cable 2 by operation of the operation part. The outer-side end portion of boot 7 is fixed to leading end portion 42 of hollow member 4 such that the internal space of boot 7, the internal space of hollow member 4, and the internal space of outer casing 3 communicate with each other. Note that, an attachment portion to which a bracket or the like used for attaching control cable 1 to a base body, such as a vehicle body, is attached directly or indirectly may be formed in hollow member 4.

Rod member 5 is a member that is to be inserted inside hollow member 4 and that relatively moves with respect to hollow member 4. Rod member 5 is coupled directly or indirectly to the operation part or operated part, and in this embodiment, rod member 5 may be in a form of being directly connected to the operated part. Rod member 5 is inserted into the hollow portion which is the inner side of hollow member 4 from the opening of hollow member 4 on a side of leading end portion 42. Rod member 5 includes a rod portion, coupling portion 52 to be provided in one end portion of the rod portion, and fixing portion 51 which is to be provided to the other end portion thereof and to which inner cable 2 is fixed. One end of inner cable 2 is fixed to rod member 5 in fixing portion 51. In fixing portion 51, one end of inner cable 2 is fixed to rod member 5 by, for example, swaging. As for the swaging, a swaging method in which one end of inner cable 2 is inserted into an insertion hole provided in fixing portion 51, can be employed, for example. The method for fixing inner cable 2 to rod member 5 is not limited to swaging, and it is also possible to use an optional method, such as casting or screwing. End surface 5a is provided to an end portion of rod member 5 on a side of inner cable 2 and is a surface perpendicular to the center axis of rod member 5. An end portion of coil spring 6 is capable of coming into contact with end surface 5a and allows coil spring 6 to be held between end surface 5a and protruding portion 43. Coupling portion 52 is provided on a coupling-member side of rod member 5, and an end portion of a rod-member side of boot 7 is fixed to coupling portion 52. Note that, boot 7 is configured to be expandable and contractible. For this reason, an end portion of a hollow-member side of boot 7 is fixed to the leading end portion of hollow member 4, so that boot 7 expands and contracts along with movement of the rod member. Rod member 5 is covered by boot 7 such that a portion of rod member 5 that moves forward and backward from an opening of hollow member 4 in an extending out direction of hollow member 4 is not exposed.

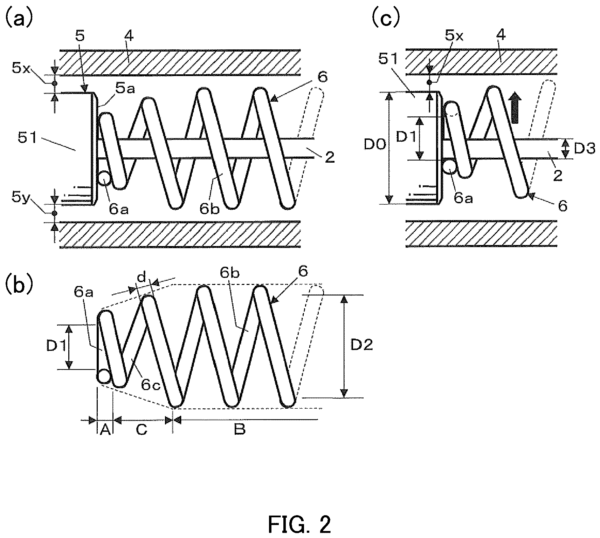

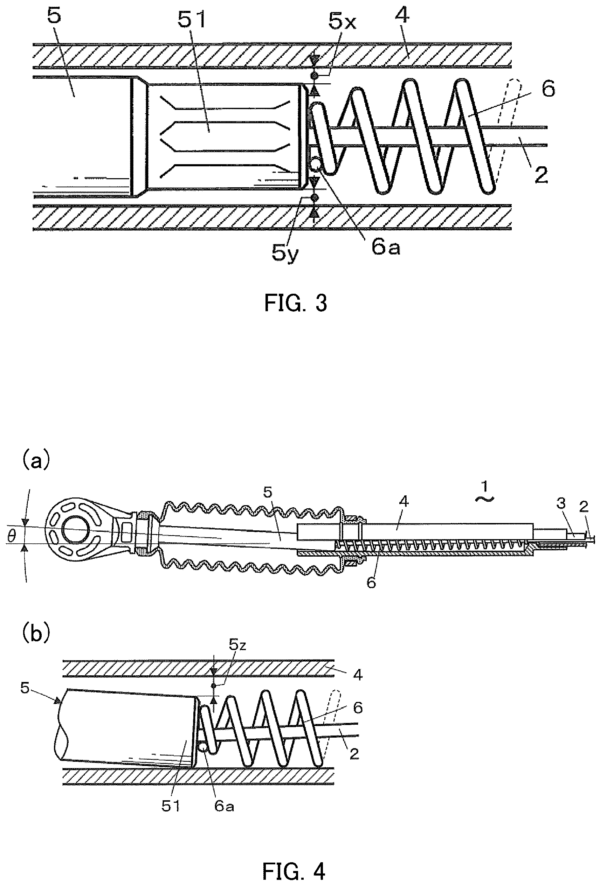

Rod member 5 moves relatively to hollow member 4 by movement of inner cable 2 in the axial direction and moves forward and backward from the opening of the leading end portion of hollow member 4. A part of rod member 5 that is to be positioned inside hollow member 4 during the forward and backward movement may have a substantially identical outer diameter, and fixing portion 51 may have a small diameter by swaging as illustrated in FIG. 3. Furthermore, the outer diameter of rod member 5 is set smaller than the inner diameter of the hollow portion of hollow member 4 so as to provide a gap between the inner wall of the hollow portion of hollow member 4 and the outer periphery of rod member 5 such that rod member 5 is slidable inside hollow member 4. As illustrated in FIG. 2(a), in a case where the center axis of rod member 5 and the center axis of hollow member 4 overlap with each other, gaps 5x and 5y exist in the radial direction between rod member 5 and hollow member 4 (there is a case where either one of gaps 5x and 5y is zero). Furthermore, in FIG. 2(a), rod member 5 and hollow member 4 are illustrated as being coaxial.

Coil spring 6 is provided so as to be capable of energizing rod member 5, and even in a case where inner cable 2 moves, coil spring 6 can provide tensile force to inner cable 2 by the energizing force. Coil spring 6 is formed by spirally winding a wire rod. Coil spring 6 is housed in hollow member 4 and includes an outer-casing side end portion and a rod-member side end portion, and openings are formed in both of the end portions, respectively. Coil spring 6 includes a hollow portion surrounded by the wound wire rod so that the openings of both ends communicate with each other. In coil spring 6, the outer-casing side end portion comes into contact with an end surface of protruding portion 43 of hollow member 4, and the rod-member side end portion is connected to end surface 5a on a side of rod member 5 to be coupled with inner cable 2. Coil spring 6 is configured such that inner cable 2 is inserted through the hollow portion of coil spring 6 from the opening of the outer-casing side end portion and one end of inner cable 2 extends out from the rod-member side end portion. In a case where the operation part is operated such that one end of inner cable 2 moves in a direction adjacent to the outer casing, the end portion of rod member 5 compresses the coil spring, then, rod member 5 is energized by a restoration force when the operation of the operation part is cancelled, and the position of rod member 5 is returned to the position before the operation part is operated. Thus, the operated part becomes in a non-operated state. Coil spring 6 is disposed in the hollow portion of hollow member 4 so as to be expandable and contractible along with sliding of rod member 5. One end of coil spring 6 is connected to fixing portion 51, and the other end of coil spring 6 is connected to seating portion 4a which is provided on an inner side of hollow member 4, such that the other end is restricted from moving to the side of outer casing 3. Seating portion 4a is formed on a surface on a leading end portion 42 side of protruding portion 43. Seating portion 43 is formed so as to have a recessed shape with respect to leading end portion 42 and formed as a surface tilted in a direction of connection portion 41 in a vertical cross-section of the hollow member. The outer-casing side end portion of coil spring 6 and seating portion 4a are configured to fit each other to prevent relative movement in a direction perpendicular to the axis, so as to prevent rattling of coil spring 6 with respect to hollow member 4. Coil spring 6 in this embodiment includes small-diameter portions 6a which are each slidable along an outer surface of inner cable 2 at both ends of coil spring 6, respectively. Coil spring 6 in this embodiment includes large-diameter portion 6b having an inner diameter larger than the inner diameter of small-diameter portion 6a, at a center portion adjacent to the center of the axial direction. Furthermore, in this embodiment, coil spring 6 includes, , a small-diameter portion, and extended-diameter portion 6c having a diameter exceeding the diameter of small-diameter portion 6a but being less than the diameter of large-diameter portion 6b, at both of the end portions of coil spring 6. Extended-diameter portion 6c is provided between small-diameter portion 6a and large-diameter portion 6b. Small-diameter portion 6a, large-diameter portion 6b, and extended-diameter portion 6c will be described later.

Coil spring 6 is positioned between end surface 5a and seating portion 4a in a state where coil spring 6 can energize rod member 5 in order to provide tensile force to control cable 1 as described above. Coil spring 6 is in a long state (non-operation state) while the operation part is not operated as illustrated in FIG. 1(a), and in a case where the operation part is operated, coil spring 6 turns into a short state (in-operation state) in which coil spring 6 contracts by rod member 5 as illustrated in FIG. 1(b). Moreover, as illustrated in this embodiment, it is favorable that coil spring 6 is in a compressed state rather than in a free length state during the non-operation state. This is because, in a case where a distance between the end surface of fixing portion 51 and seating portion 4a in the non-operation state exceeds the free length of coil spring 6, coil spring 6 may move in the axial direction, then, one end of coil spring 6 may hit end surface 5a and the other end of coil spring 6 may hit seating portion 4a, thus an abnormal noise may be generated. Furthermore, coil spring 6 can be set in a state where coil spring 6 contracts to have a length shorter than a natural length such that, even when inner cable 2 extends in the non-operation state, coil spring 6 can absorbs this extension.

It is preferable that, in the rod-member side end portion of coil spring 6, an inner diameter of a part which is in contact with fixing portion 51 is less than an outer diameter of the end portion of fixing portion 51. This is because, when the outer diameter of the part which is in contact with fixing portion 51 is less than the outer diameter of fixing portion 51, a situation may occur where fixing portion 51 enters the inside of coil spring 6 and is locked, so that coil spring 6 cannot be pressed by rod member 5. Moreover, it is preferable that an outer diameter of the outer-casing side end portion of coil spring 6 is greater than an inner diameter of the communication hole of protruding portion 43. This is because, this configuration can prevent occurrence of a situation where the other end of coil spring 6 enters the communication hole of protruding portion 43 and is locked and thus causes an operation failure.

Next, an operation of control cable 1, particularly, a major operation of coil spring 6 will be described. In control cable 1, from the non-operation state (state of FIG. 1(a)), a traction force is added to the other end (not illustrated) of inner cable 2 by operation of the operation part, inner cable 2 then moves. Along with this movement of inner cable 2, rod member 5 fixed to one end of inner cable 2 moves as well. At this time, the rod-member side end portion of coil spring 6 is pressed by end surface 5a of rod member 5. Meanwhile, the other end of coil spring 6 is restricted from moving to the outer-casing side because the other end of coil spring 6 is connected to seating portion 4a. For this reason, coil spring 6 is compressed by rod member 5 (state of FIG. 1(b)). When the operation of the operation part ends, and the traction force given by the operation part is released, rod member 5 is returned to the original position (the state of FIG. 1(a)) by a restoration force of coil spring 6 as described above. Control cable 1 transmits the operation added to the one end side of control cable 1 to the other end side thereof and controls the operated part by the operation described above.

As illustrated in FIGs. 2(a) and 2(b), the wire forming coil spring 6 has a diameter that allows wire diameter d to enter gap 5x or 5y described above. Inner diameter D1 of small-diameter portion 6a of coil spring 6 is large enough for coil spring 6 to be slidable along the outer surface of inner cable 2, and inner diameter D2 of large-diameter portion 6b is larger than inner diameter D1 of small-diameter portion 6a. The expression "to be slidable along the outer surface of inner cable 2" used herein refers to movement of small-diameter portion 6a along the axial direction of inner cable 2 when coil spring 6 contracts. Thus, this movement is not limited to a case where small-diameter portion 6a moves while in contact with inner cable 2, and this movement includes a case where small-diameter portion 6a moves while not in contact with inner cable 2. Since small-diameter portion 6a is made slidable along the outer surface of inner cable 2, when coil spring 6 contracts, small-diameter portion 6a is restricted by inner cable 2 from moving in a direction perpendicular to the axis, but contraction of coil spring 6 is not hindered by inner cable 2.

In this embodiment, as illustrated in FIG. 1(c), small-diameter portions 6a are provided at both ends of coil spring 6, respectively. As illustrated in FIG. 2(b), small-diameter portion 6a on a side of fixing portion 51a is provided in region A of the first turn from the leading end of the rod-member side end portion of coil spring 6 as the origin. Likewise, as illustrated in FIG. 1(c), small-diameter portion 6a on a side of the outer-casing side end portion is also provided in a region of the first turn from the leading end of the outer-casing side end portion as the origin. Large-diameter portion 6b is provided in a region between two regions A corresponding to small-diameter portions 6a on both ends of coil spring 6. Region B which is composed of contiguous turns having the same inner diameter is large-diameter portion 6b in a region having an inner diameter larger than the inner diameter of small-diameter portions 6a, herein. The number of turns of small-diameter portion 6a is not limited to one turn, and two or more turns may be employed.

In coil spring 6, in order for coil spring 6 to be relatively movable with respect to hollow member 4, a gap is provided between an outer diameter of coil spring 6 and an inner wall of hollow member 4. Thus, coil spring 6 is movable in a direction perpendicular to the axis of coil spring 6. Small-diameter portion 6a is provided in a position where movement in the radial direction is suppressed by control cable 2 and thus entry of coil spring 6 into the gap between rod member 5 and hollow member 4 can be suppressed, for example, even in a case where coil spring 6 moves in a direction perpendicular to the axis when one end of coil spring 6 is pressed by fixing portion 51, during the operation of control cable 1 as described above, herein. In this embodiment, small-diameter portions 6a are provided at both ends of coil spring 6, respectively, and small-diameter portion 6a on the one end side serves as a small-diameter portion provided in a position where entry of coil spring 6a into the gap can be suppressed.

A description will be herein given of how entry of coil spring 6 into the gap is suppressed by small-diameter portion 6a on the one end side of coil spring 6 in control cable 1 of the present embodiment. First, as a related-art example, a description will be given of how coil spring 9 enters a gap in a control cable including coil spring 9 having a diameter that is uniform in a length direction as an example. Note that, the following description is a major example of a case where a part on one end side of coil spring 9 enters between rod member 5 and hollow member 4 and is locked, and this entry and the locked state may occur even in a case other than the case described below.

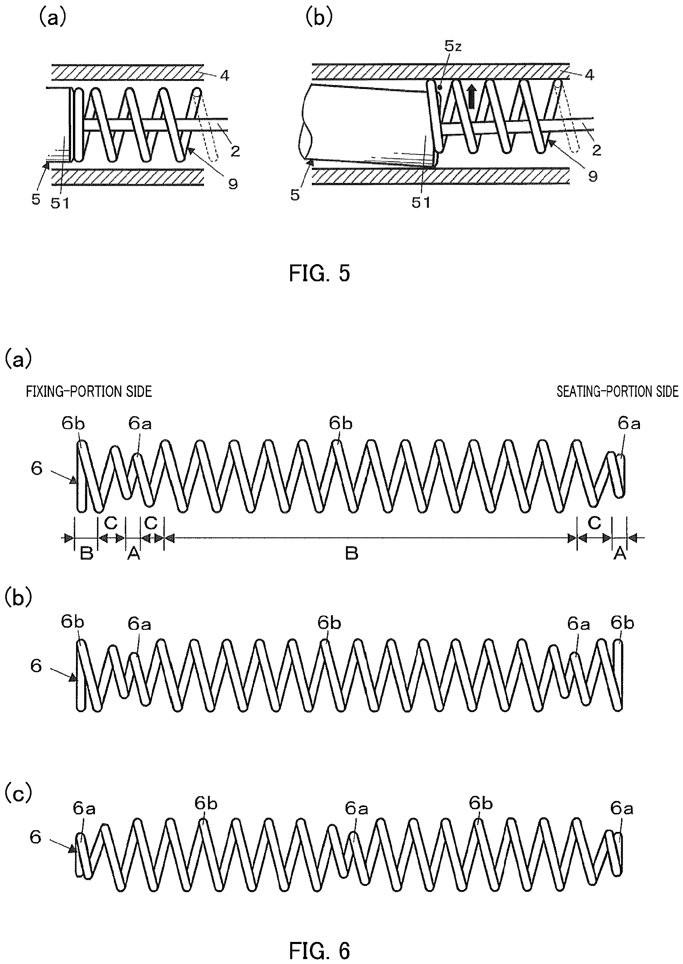

As illustrated in FIG. 5, the shape of coil spring 9 of the related art is a shape having a diameter that is uniform in the length direction of coil spring 9, and is movable in the radial direction in hollow member 2. Typically, an outer diameter of rod member 5 is less than an inner diameter of a hollow portion of hollow member 4 (leading end portion 42 and middle portion 44). This configuration is employed for the purpose of avoiding an increase in sliding resistance, which may occur when an outer peripheral surface of rod member 5 comes into contact with an inner peripheral surface of hollow member 4 when a control cable is attached to an attachment target. Thus, gaps 5x and 5y between rod member 5 and hollow member 4 become equal to each other in a case where the respective center axes of inner cable 2, rod member 5, and coil spring 9 are set to overlap with each other on the center axis of hollow member 4 as illustrated in FIG. 5(a), and in a case where rod member 5 and the hollow member come into contact with each other, either one of gaps 5x and 5y becomes zero in the contact area. In particular, as illustrated in FIG. 5(b), when the center axis of rod member 5 intersects with the center axis of hollow member 4 depending on how and/or in which direction control cable 1 is attached, rod member 5 is positioned in a tilted state, and the gap between rod member 5 and hollow member 4 becomes large. Furthermore, in a case where coil spring 9 moves in a direction perpendicular to the axis due to tilting of end surface 5a of rod member 5 and/or torsion of coil spring 9, coil spring 9 may move to the gap side (upper side in the drawing, herein). At this time, in a case where the outer-casing side end portion of rod member 5 comes into contact with the inner surface of hollow member 4, either one of gap 5x and gap 5y no longer exists, and gap 5z having a size resulting from addition of gap 5x and gap 5y appears. For this reason, even when gap 5x and gap 5y are each smaller than a wire diameter of the wire rod of coil spring 9 when gap 5x and gap 5y are in a steady state, the wire rod of coil spring 9 can enter and be locked between rod member 5 and hollow member 4 when gap 5z is larger than the wire diameter of the wire rod of coil spring 9. Then, when the control cable is used and then rod member 5 moves in a direction of the outer casing, end surface 5a of rod member 5 is shifted from the center axis of coil spring 9. In this case, a part of the edge of the end portion of coil spring 9 is pressed by end surface 5a, and another part of the edge of the end portion of coil spring 9 that is not pressed by end surface 5a moves out of end surface 5a and expands, and coil spring 9 is tilted with respect to the axis direction and pressed. Thus, an upper side of the one end side of coil spring 9 enters and is locked in gap z between rod member 5 and hollow member 4, and this may become a cause of a malfunction.

In order to suppress coil spring 9 from entering a gap and being locked therein as described above, the following measures are considered possible, for example, (1) the wire diameter of coil spring 9 is made larger than a gap that can be formed between hollow member 4 and rod member 5, and (2) an outer diameter of an entirety of coil spring 9 is made smaller in order that coil spring 9 cannot face a gap in the axial direction when an inner surface of coil spring 9 comes into contact with inner cable 2. In the measures (1) and (2), however, the coil spring becomes one that has a large spring constant, and the operation force becomes large, so that a problem, such as the need for enhancing the durability of each member, occurs.

Meanwhile, as illustrated in FIG. 4(b), with control cable 1 of the present embodiment, at least one small-diameter portion 5a is provided in a position where the entry of coil spring 6 can be suppressed. For this reason, small-diameter portion 5a is engaged with inner cable 2, and can suppress shifting of coil spring 6 with respect to the rod member in a direction perpendicular to the axis. Accordingly, even in a case where the gap between rod member 5 and hollow member 4 becomes large and the wire diameter of the wire rod of coil spring 6 is smaller than the enlarged gap, movement of small-diameter portion 6a in the radial direction is suppressed by inner cable 2, and entry of coil spring 6 into the gap is suppressed. More specifically, when the inner surface of small-diameter portion 6a comes into contact with inner cable 2 in a case where gap 5z is generated as illustrated in FIG. 4(b), an upper end of the wound wire forming small-diameter portion 6a does not face gap z in the axial direction. Thus, the occurrence of a situation is suppressed, where the wire rod of the end portion of coil spring 6 enters a clearance and is locked therein, which may occur when the control cable is used and then rod member 5 moves in the direction of the outer casing. Thus, a malfunction of control cable 1 can be suppressed. In addition, coil spring 6 can be easily designed to have a desired spring constant.

For coil spring 6, as long as at least one small-diameter portion 5a is provided in a position where entry of coil spring 6 into a gap formed between rod member 5 and hollow member 4 can be suppressed, the position of small-diameter portion 5a in coil spring 6 is not limited particularly, and at least one small-diameter portion 5a may be provided at the third pitch from the leading end of coil spring 6. For variations of the position of small-diameter portion 6a that can suppress entry of a coil spring into a gap, a description will be given with reference to FIG. 6, as a variation of coil spring 6 of the control cable according to the embodiment. Coil spring 6 illustrated in FIG. 6(a) has large-diameter portion 6b at an end portion on a side of a fixing portion, and small-diameter portion 6a in a position closer to the center of the coil by two turns from the end portion of the coil. Even with coil spring 6 configured in this manner, the presence of small-diameter portion 6a suppresses movement of coil spring 6 in the radial direction and can suppress a malfunction, such as biting of coil spring 6 or the like. More specifically, small-diameter portion 6a is not limited to be provided in an end portion of coil spring 6, and may be provided in any position as long as movement of small-diameter portion 6a in the radial direction is suppressed by inner cable 2 and entry of coil spring 6 into a gap can be suppressed when one end of coil spring 6 is pressed by fixing portion 51. In coil spring 6 illustrated in FIG. 6(a), for example, small-diameter portions 4a suppress movement of end portions of coil spring 6 in the radial direction, and thus, even when the end portion of coil spring 6 is large-diameter portion 4b, an upper side of large-diameter portion 4b and gap z do not face each other. Meanwhile, when the distance from the end portion of coil spring 6 to small-diameter portion 4a is too long, meandering (tilting with respect to the axial direction) between the end portion of coil spring 6 and small-diameter portion 6a may be generated, and the upper side of large-diameter portion 4b and gap z may face each other. For this reason, inner diameter D1 of small-diameter portion 6a, and the arrangement position from an end portion and/or the like can be selectively set as appropriate, with consideration of a required specification such as a spring constant for coil spring 6, an outer diameter of fixing portion 51, and an inner diameter of hollow member 4 and/or the like.

Coil spring 6 illustrated in FIG. 6(b) further includes the structure on the side of the fixing portion in coil spring 6 of FIG. 6(a) on a side of the seating portion as well. With coil spring 6 configured in this manner, since the coil diameter of the end portion is large, seating on seating portion 4a can be stabilized. Coil spring 6 illustrated in FIG. 6(c) includes small-diameter portions 6a at both ends, and further includes small-diameter portion 6a in a center portion. A plurality of small-diameter portions 6a other than small-diameter portions 6a at both ends of coil spring 6 may be provided at appropriate positions, and small-diameter portions 6a provided in this manner can prevent meandering of coil spring 6 that may occur when coil spring 6 is compressed.

In coil spring 6 of the embodiment and the variation of the embodiment, region B of large-diameter portion 6b occupies a majority of coil spring 6. For this reason, as compared with a case using a coil spring having a uniformly small inner diameter, (1) spring contact can be large, (2) meandering (winding) along inner cable 2 can be prevented, and (3) the number of parts where coil spring 6 comes into contact with inner cable 2 is less, so that the workability improves.

Furthermore, in coil spring 6, small-diameter portion 6a may be provided on at least one of one end and the other end of coil spring 6. Coil spring 6 in which small-diameter portion 6a is provided on only one of one end and the other end of coil spring 6 is housed in hollow member 5 arranging the side having small-diameter portion 6a on a side of fixing portion 51. Manufacturing of coil springs 6 with this configuration is simpler than manufacturing of coil springs 6 in which small-diameter portions 6a are provided on both ends, respectively.

Meanwhile, assembly of control cables 1 is easy for coil springs 6 in which smaller diameter portions 6a are provided on both ends of coil spring 6, because it is not necessary to select the insertion direction of inner cable 2 at the time of inserting inner cable 2. Coil spring 6 including small-diameter portions 6a on both ends is positioned on inner cable 2 at two positions by small-diameter portions 6a and has only a small contact area with hollow member 4 or inner cable 2, and thus, the workability of coil spring 6 is good.

As in the present embodiment, coil spring 6 may have extended-diameter portion 6c (see, FIG. 2(b)) having a diameter exceeding the diameter of small-diameter portion 6a but being less than the diameter of large-diameter portion 6b, between small-diameter portion 6a and large-diameter portion 6b. Extended-diameter portion 6c is composed of each wound wire in region C between small-diameter portion 6a and large-diameter portion 6b. The diameter of each wound wire (twice the curvature radius in each part of wire rod) in extended-diameter portion 6c has a diameter between the diameter of small-diameter portion 6a and the diameter of large-diameter portion 6b. As long as extended-diameter portion 6c increases in diameter from the side of small-diameter portion 6a to the side of large-diameter portion 6b, extended-diameter portion 6c may increase in diameter for each turn and/or may include a plurality of portions having the same diameter.

As described above, the present invention can suppress biting of an energizing member that energizes the rod member during operation of a control cable, and the attachment position of the operation part and the operated part is not limited to the position described above, so that the rod member may be attached to the operation part. For the inner cable, it is sufficient as long as the inner cable can control the operated part by transmitting the operation applied to one end side of the inner cable to the other end side thereof, and either one of ends of the inner side cable is coupled directly or indirectly to the operation part, and the other end thereof is coupled directly or indirectly to the operated part. In order to transmit the operation force applied to the operation part to the operated part, the inner cable is routed under tensile force. Any inner cable can be used for inner cable 2 as long as the inner cable is configured to be capable of achieving a function of transmitting the added push and/or pull force in the axial direction to one end, e.g., the operated part. Moreover, illustration is given such that the respective center axes of inner cable 2, rod member 5, and coil spring 6 overlap with each other on the center axis of hollow member 4 in FIG. 1 to FIG. 3 for the sake of description. However, there may be a case where the center axes of the respective members do not overlap with each other on the center axis of the hollow member, depending on, for example, how control cable 1 is attached.

Note that, the present invention is not limited to the configurations described above and can be modified in various ways within the scope of the appended claims. For example, the configurations that the embodiment described above and the configurations of the variations are combined with each other may be employed.

### Reference Signs List

1 Control cable
2 Inner cable
3 Outer casing
4 Hollow member
4a Seating portion
5 Rod member
5x, 5y, 5z gap
51 Fixing Portion
6 Coil spring
6a Small-diameter portion
6b Large-diameter portion
6c Extended-diameter portion
d Wire diameter
A Region of small-diameter portion 6a
B Region of large-diameter portion 6b
C Region of extended-diameter portion 6c
D0 Outer diameter of fixing portion
D1 Inner diameter of small-diameter portion
D2 Inner diameter of large-diameter portion

## Claims

1. A control cable (1) comprising:
an inner cable (2);
an outer casing (3) in which the inner cable (2) slides;
a hollow member (4) to be fixed to an end portion of the outer casing (3);
a rod member (5) including a fixing portion (51) which one end of the inner cable (2) is fixed, and being configured to move inside the hollow member (4); and
a coil spring (6) through which the inner cable (2) is inserted, the coil spring (6) being placed in the hollow member (4) so as to be expandable and contractible along a slide direction of the rod member (5) by being connected to the fixing portion at one end of the coil spring (6) and being connected to a seating portion (4a), which is provided on an inner side of the hollow member (4), at another end of the coil spring (6) such that the other end of the coil spring (6) is restricted from moving to a side of the outer casing (3), wherein:
a gap (5x, 5y, 5z) exists in a radial direction between the rod member (5) and the hollow member (4),
the coil spring (6) has a wire diameter (d) that allows the coil spring wire to enter the gap,
the coil spring (6) includes;
a small-diameter portion (6a) slidable along an outer peripheral surface of the inner cable (2), and
a large-diameter portion (6b) having an inner diameter larger than an inner diameter of the small-diameter portion,
an inner diameter of an internal space of a leading end portion (42) in which the rod member (5) and the coil spring (6) are placed in the hollow member (4) is larger than both an outer diameter of the rod member (5) and an outer diameter of the large-diameter portion of the coil spring (6), throughout a length of the leading end portion (42), and
the small-diameter portion is provided in a position where movement of the small-diameter portion in the radial direction is suppressed by the inner cable (2) when the one end of the coil spring (6) is pressed by the fixing portion, and entry of the coil spring (6) into the gap can be suppressed as a result.

2. The control cable (1) according to claim 1, wherein the small-diameter portion is provided in at least one (A) of the one end and the other end of the coil spring (6).

3. The control cable (1) according to claim 1 or 2, wherein the rod member (5) includes a large-diameter portion having a diameter larger than that (DO) of the fixing portion,
and
an inner diameter of the internal space of the leading end portion is larger than both an outer diameter of the large-diameter portion of the rod member (5) and the outer diameter of the large-diameter portion of the coil spring (6), throughout the length of the leading end portion.

4. The control cable (1) according to any one of claims 1 to 3, wherein the coil spring (6) further includes, between the small-diameter portion and the large-diameter portion, an extended-diameter portion having a diameter exceeding a diameter of the small-diameter portion and being less than a diameter of the large-diameter portion.

## Patentansprüche

1. Steuerkabel (1), umfassend:
ein inneres Kabel (2);
einen Außenmantel (3), in dem das innere Kabel (2) gleitet;
ein hohles Element (4) zur Befestigung an einem Endabschnitt des Außenmantels (3);
ein Stabelement (5), das einen Befestigungsabschnitt (51) umfasst, an dem ein Ende des inneren Kabels (2) befestigt ist, und das dazu eingerichtet ist, sich in dem hohlen Element (4) zu bewegen; und
eine Schraubenfeder (6), durch die das innere Kabel (2) eingefügt ist, wobei die Schraubenfeder (6) derart in dem hohlen Element (4) angeordnet ist, dass sie sich entlang einer Gleitrichtung des Stabelements (5) ausdehnen und zusammenziehen kann, indem sie derart mit dem Befestigungsabschnitt an einem Ende der Schraubenfeder (6) verbunden ist und mit einem Auflageabschnitt (4a), der auf einer Innenseite des hohlen Elements (4) vorgesehen ist, an einem anderen Ende der Schraubenfeder (6) verbunden ist, dass das andere Ende der Schraubenfeder (6) in der Bewegung zu einer Seite des Außenmantels (3) eingeschränkt ist, wobei:
ein Spalt (5x, 5y, 5z) in einer radialen Richtung zwischen dem Stabelement (5) und dem hohlen Element (4) vorhanden ist,
die Schraubenfeder (6) einen Drahtdurchmesser (d) aufweist, der es ermöglicht, dass der Schraubenfederdraht in den Spalt eintritt,
die Schraubenfeder (6) umfasst:
einen Abschnitt mit kleinem Durchmesser (6a), der entlang einer äußeren Umfangsfläche des inneren Kabels (2) gleiten kann, und
einen Abschnitt mit großem Durchmesser (6b), der einen Innendurchmesser aufweist, der größer als ein Innendurchmesser des Abschnitts mit kleinem Durchmesser ist,
wobei ein Innendurchmesser eines Innenraums eines vorderen Endabschnitts (42), in dem das Stabelement (5) und die Schraubenfeder (6) in dem hohlen Element (4) angeordnet sind, über eine gesamte Länge des vorderen Endabschnitts (42) größer ist als sowohl ein Außendurchmesser des Stabelements (5) als auch ein Außendurchmesser des Abschnitts mit großem Durchmesser der Schraubenfeder (6), und
wobei der Abschnitt mit kleinem Durchmesser in einer Position vorgesehen ist, in der eine Bewegung des Abschnitts mit kleinem Durchmesser in der radialen Richtung von dem inneren Kabel (2) unterbunden wird, wenn der Befestigungsabschnitt auf das eine Ende der Schraubenfeder (6) Druck ausübt, und infolgedessen das Eintreten der Schraubenfeder (6) in den Spalt unterbunden werden kann.

2. Steuerkabel (1) nach Anspruch 1, wobei der Abschnitt mit kleinem Durchmesser in mindestens einem (A) von dem einen Ende und dem anderen Ende der Schraubenfeder (6) vorgesehen ist.

3. Steuerkabel (1) nach Anspruch 1 oder 2, wobei das Stabelement (5) einen Abschnitt mit großem Durchmesser umfasst, dessen Durchmesser größer als der (D0) des Befestigungsabschnitts ist,
und
ein Innendurchmesser des Innenraums des vorderen Endabschnitts über die gesamte Länge des vorderen Endabschnitts größer ist als sowohl ein Außendurchmesser des Abschnitts mit großem Durchmesser des Stabelements (5) als auch der Außendurchmesser des Abschnitts mit großem Durchmesser der Schraubenfeder (6).

4. Steuerkabel (1) nach einem der Ansprüche 1 bis 3, wobei die Schraubenfeder (6) ferner zwischen dem Abschnitt mit kleinem Durchmesser und dem Abschnitt mit großem Durchmesser einen Abschnitt mit erweitertem Durchmesser umfasst, der einen Durchmesser hat, der größer als ein Durchmesser des Abschnitts mit kleinem Durchmesser und kleiner als ein Durchmesser des Abschnitts mit großem Durchmesser ist.

## Revendications

1. Câble de commande (1) comprenant :
un câble interne (2) ;
un boîtier externe (3) dans lequel coulisse le câble interne (2) ;
un élément creux (4) destiné à être fixé à une partie d'extrémité du boîtier externe (3) ;
un élément tige (5) comprenant une partie de fixation (51) à laquelle est fixée une extrémité du câble interne (2) et qui est conçu pour se déplacer à l'intérieur de l'élément creux (4) ; et
un ressort hélicoïdal (6) dans lequel le câble interne (2) est inséré, le ressort hélicoïdal (6) étant placé dans l'élément creux (4) de façon à être extensible et rétractable dans une direction de coulissement de l'élément tige (5) par sa liaison à la partie de fixation en une extrémité du ressort hélicoïdal (6) et étant relié à une partie d'assise (4a), qui est disposée sur un côté interne de l'élément creux (4), en une autre extrémité du ressort hélicoïdal (6) de telle sorte que le déplacement de l'autre extrémité du ressort hélicoïdal (6) est limité vers un côté du boîtier externe (3) ;
un espace (5x, 5y, 5z) existant dans une direction radiale entre l'élément tige (5) et l'élément creux (4),
le ressort hélicoïdal (6) présentant un diamètre de fil (d) qui permet l'entrée du fil de ressort hélicoïdal dans l'espace,
le ressort hélicoïdal (6) comprenant :
une partie de petit diamètre (6a) pouvant coulisser le long d'une surface périphérique externe du câble interne (2) et
une partie de grand diamètre (6b) présentant un diamètre interne plus grand qu'un diamètre interne de la partie de petit diamètre,
un diamètre interne d'un espace interne d'une partie d'extrémité avant (42) dans laquelle l'élément tige (5) et le ressort hélicoïdal (6) sont placés dans l'élément creux (4) étant plus grand à la fois qu'un diamètre externe de l'élément tige (5) et qu'un diamètre externe de la partie de grand diamètre du ressort hélicoïdal (6), sur toute une longueur de la partie d'extrémité avant (42) et
la partie de petit diamètre étant disposée dans une position dans laquelle le déplacement de la partie de petit diamètre dans la direction radiale est supprimé par le câble interne (2) lorsque ladite une extrémité du ressort hélicoïdal (6) est pressée par la partie de fixation et l'entrée du ressort hélicoïdal (6) dans l'espace pouvant être supprimée en conséquence.

2. Câble de commande (1) selon la revendication 1, la partie de petit diamètre étant disposée dans au moins une extrémité (A) parmi ladite une extrémité et ladite autre extrémité du ressort hélicoïdal (6).

3. Câble de commande (1) selon la revendication 1 ou 2, l'élément tige (5) comprenant une partie de grand diamètre présentant un diamètre plus grand que ce (D0) de la partie de fixation,
et
un diamètre interne de l'espace interne de la partie d'extrémité avant étant plus grand à la fois qu'un diamètre externe de la partie de grand diamètre de l'élément tige (5) et que le diamètre externe de la partie de grand diamètre du ressort hélicoïdal (6), sur toute la longueur de la partie d'extrémité avant.

4. Câble de commande (1) selon l'une quelconque des revendications 1 à 3, le ressort hélicoïdal (6) comprenant en outre, entre la partie de petit diamètre et la partie de grand diamètre, une partie de diamètre étendu présentant un diamètre dépassant un diamètre de la partie de petit diamètre et étant inférieur à un diamètre de la partie de grand diamètre.
